# EUROPEAN PATENT SPECIFICATION

(11) **EP 1 764 272 B1**
(45) Date of publication and mention of the grant of the patent: **21.05.2008**
(21) Application number: 05020316.5
(22) Date of filing: 17.09.2005
(51) Int. Cl.: B60R 21/30

(54) **Inflating device for an air bag of a vehicle**
Aufblasvorrichtung für den Gassack eines Fahrzeugs
Appareil pour gonfler le sac gonflable d'un véhicule

(43) Date of publication of application: 21.03.2007
(73) Proprietor: GSK INTEK CO., Ltd., Hsen-Kang Chang hua (TW)
(72) Inventor: Yu, Ming-Chang No. 17, Alley 74, Lane 377, Sec. 1, Changhua Hsien (TW); Kuo, Shih-Ju, Hemei Chen Changhua Hsien (TW); Hsieh, Chien-Liang, Changhua City Changhua Hsien (TW)
(74) Representative: Hauck Patent- und Rechtsanwälte

(56) References cited:
- US-A- 4 817 828
- US-A- 5 129 674
- US-A- 5 226 670
- US-A- 5 681 056
- US-A- 5 788 267
- US-B1- 6 435 549

## Description

### 1. Field of the Invention

The present invention relates to an inflating device, and more particularly to an inflating device for an air bag of a vehicle and one that can reduce the amount of chemicals used in such air bags.

### 2. Description of Related Art

In moving vehicles such as cars and trucks, serious injury often occurs in sudden braking as the vehicle occupants are violently thrown around. Although seat belts are fitted to cars, many people refuse to wear them and so non-choice methods, such as air bags were devised. That is, the air bag will automatically inflate in certain circumstances and this actuation needs no input from occupants. Furthermore, the airbag does not restrict the occupants in any way during normal driving conditions. To inflate an air bag, specific chemicals are contained in the air bag and an igniting device is mounted in the vehicle beneath the air bag. When the vehicle experiences impact such as in collision with another, the igniting device will be actuated to ignite the chemicals so as to make the chemicals to release nitrogen. Consequently, the air bag can be inflated in 20 to 30 ms (millisecond) to keep the occupants from being injured.

To provide a sufficient damping effect to the driver or passenger in time, the air bag must be entirely inflated as rapidly as possible. However, the bag must be of quite a large size to prevent the vehicle occupant from being thrown around, yet to inflate such a volume in a dramatically short amount of time is challenging for the designers. During the reaction of the chemicals for releasing nitrogen, the temperature in the air bag is raised to the extent that the driver or passenger could be burned.

US patent No. 5,226,670 discloses a conventional vehicle safety apparatus for inflating an air bag. It is considered the closest prior art.

The main objective of the invention is to provide an inflating device for an air bag of a vehicle and one that can reduce the amount of use of chemicals to keep the user from being burned. The inflating device has a casing, an air bag bracket, an air generating device and a check valve. The casing has an inlet, an outlet and two sides. The air bag bracket is attached to the outlet in the casing for supporting the air bag. The air generating device is mounted on the casing and has a tube, an air generator and a guiding plate. The tube extends into the casing and has an air channel defined in the tube and multiple vents communicating with the air channel. The air generator is attached to one end of the tube and has a housing, a chemical holder and an igniting device. The housing is attached to the end of the tube. The chemical holder is mounted inside the housing to contain chemicals and has multiple exhausting bores communicating with the air channel in the tube. The igniting device is attached to housing and extends into the chemical holder to ignite the chemicals in the chemical holder. The guide plate is mounted inside the casing and corresponds to the vents in the tube. A gap is defined between the tube and the guide plate to define a guiding channel between the tube and the guide plate and communicating with the vents in the tube and the outlet in the casing. The check valve is mounted in the casing and corresponds to and closes the inlet of the casing.

### IN THE DRAWINGS

Fig. 1 is an exploded perspective view of an inflating device in accordance with the present invention;
Fig. 2 is a cross sectional front view along line 2-2 in Fig. 3 of the inflating device in Fig. 1;
Fig. 3 is a cross sectional side plan view in Fig. 1; and
Fig. 4 is an operational side plan view in cross section of the inflating device in Fig. 1.

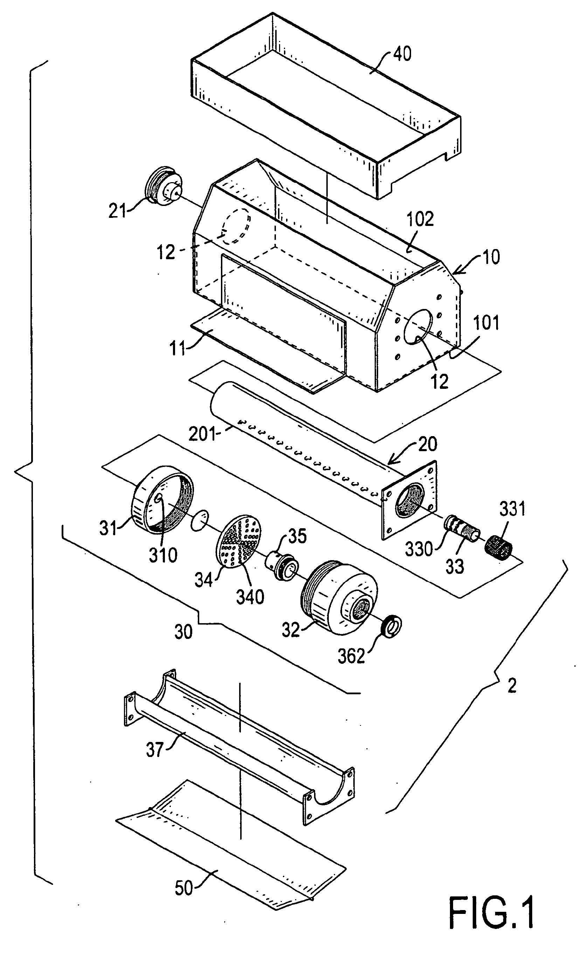

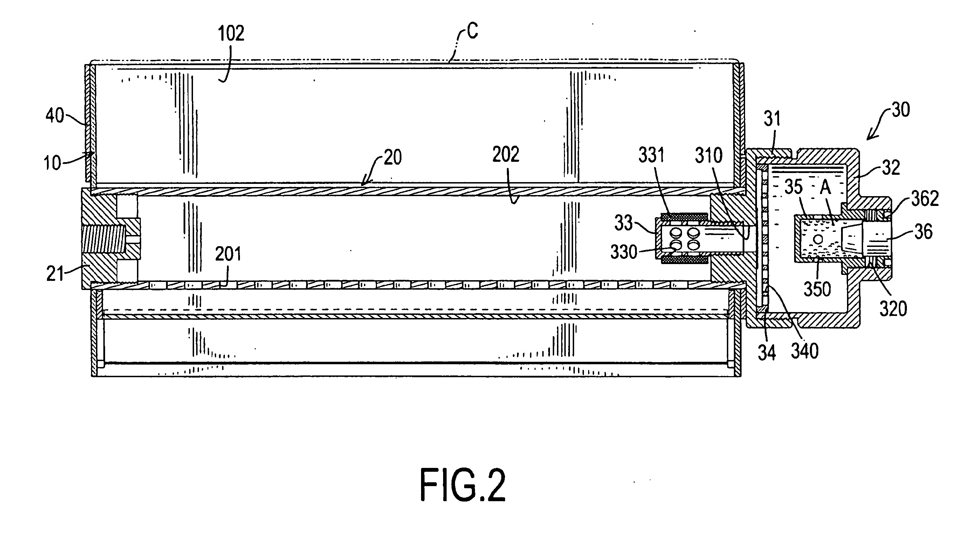

With reference to Figs. 1 to 3, an inflating device for an air bag of a vehicle in accordance with the present invention comprises a casing (10), an air bag tray (40), an air generating device (2) and a check valve (50).

The casing (10) has an inlet (101), an outlet (102), two sides and two brackets (11). Each side has a mounting hole (12) defined through the side. The brackets (11) are L-shaped and are adapted to mount the casing (10) to the vehicle.

The air bag tray (40) is mounted on the casing (10) and corresponds to the outlet (102) to support the air bag (C).

The air generating device (2) is mounted on the casing (10) and comprises a tube (20), an air generator (30) and a guide plate (37). The tube (20) is mounted between the mounting holes (12) in the sides of the casing (10) and extends along an interior of the casing (10). The tube (20) has an air channel (202) defined in the tube (20) and multiple vents (201) communicating with the air channel (202).The vents exhausting holes (201) are defined in the tube (20) at a side opposite to the outlet (102) in the casing (10). In a preferred embodiment, the tube (20) has two open ends including a first open end and a second open end, and the second open end is sealed with a plug (21).

The air generator (30) is mounted on the first open end of the tube (20) and comprises a housing, a chemical holder (35), an igniting device (36), a turbulence plate (34), a filter holder (33) and a filter (331). The housing is attached to the first open end of the tube (20) and comprises a base (31) and a cover (32). The base (31) is attached to the tube (20) and has a bore (310) communicating with the air channel (202) in the tube (20). The cover (32) is detachably attached to the base (31) with threads and has a threaded mounting hole (320). The chemical holder (35) is attached to the threaded mounting hole (320) and is mounted inside the housing to contain specific chemicals (A). The chemical holder (35) has multiple exhausting bores (350) communicating with the air channel (202) in the tube (20) through the bore (310) in the base (31). The igniting device (36) is mounted in the threaded mounting hole (320) in the cover (32) with a collar (362) and extends into the chemical holder (35) to ignite the chemicals (A) in the chemical holder (35).

The turbulence plate (34) is mounted inside the housing and has multiple turbulence holes (340). The filter holder (33) is hollow, is attached to the bore (310) in the base (31) and extends into the air channel (202) in the tube (20). The filter holder (33) has multiple through holes (330) defined through the holder (33) and communicating with the air channel (202). The filter (331) is mounted around the filter holder (33) and covers the through holes (330) in the filter holder (33).

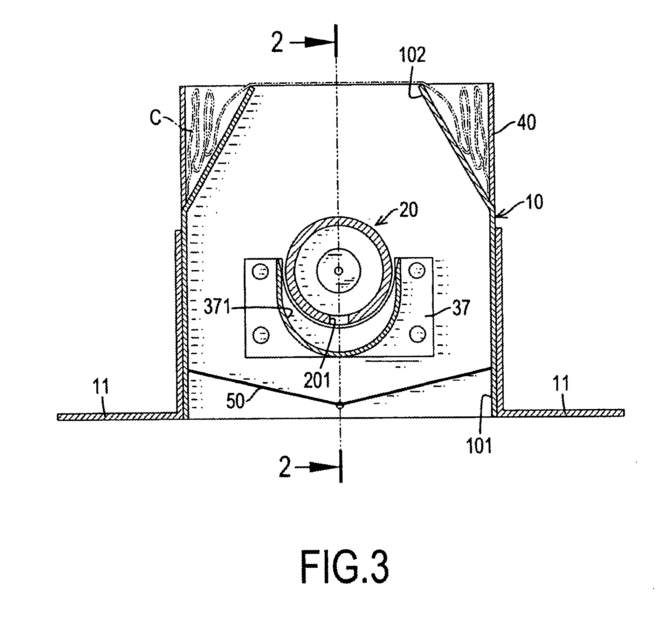

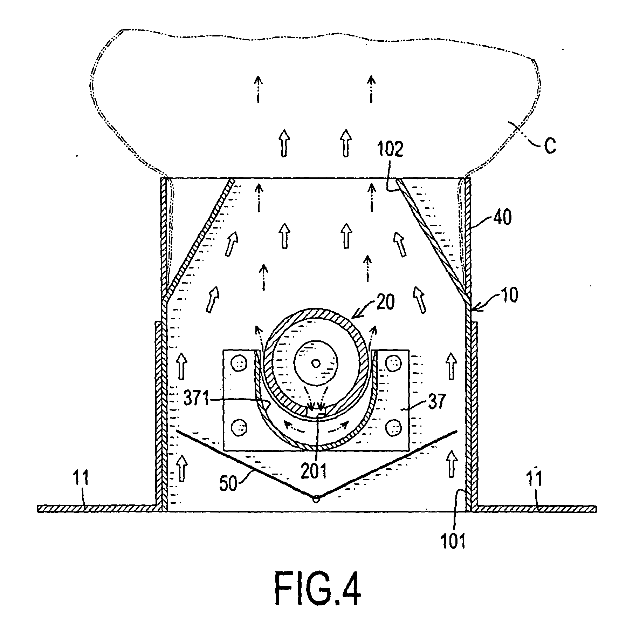

The guide plate (37) is mounted in the casing (10), is U-shaped and mounted around the tube (20) and corresponds to the vents (201) in the tube (20). With additional reference to Figs. 3 and 4, a gap is defined between the tube (20) and the guide plate (37) to define a U-shaped guiding channel (371) between the tube (20) and the guide plate (37) and communicating with the exhausting holes (201) in the tube (20) and the outlet (102) in the casing (10).

The check valve (50) is mounted in the casing (10) and corresponding to the inlet (101) to close the inlet (101). In a preferred embodiment, the check valve (50) comprises a V-shaped resilient sheet mounted in the casing (10). The resilient sheet has two ends attached to the sides of the casing (10) and two sides abutting with the inner surface of the casing (10).

In operation, with reference further to Fig. 4, when the vehicle collides with another vehicle or object, the igniting device (36) is actuated to ignite the chemicals (A) in the chemical holder (35) to release nitrogen. The nitrogen will flow into and inflate air bag (C) at a high speed through the exhausting bores (350) in the chemical holder (35), the turbulence holes (340) in the turbulence plate (34), the through holes (330) in the filter holder (30), the air channel (202) and vents (201) in the tube (20), the guiding channel (371) and the outlet (102) in the casing (10). When the nitrogen flows into the air bag (C), a negative pressure will occur in the casing (10). Consequently, air outside the casing (10) will be sucked into the casing (10) through the check valve (50) and will flow into the air bag (C). Therefore, the air bag (C) is filled with about one-third nitrogen and two-thirds air. Thus, the amount of use of the chemicals (A) for releasing nitrogen is reduced relative to the prior art. In addition, because the chemical reaction for generating nitrogen is far away from the air bag (C) and the amount of the chemicals is reduced, the temperature in the air bag (C) will not rise during the inflating process so that the driver or passenger will not be burned.

## Claims

1. An inflating device for an air bag (C) of a vehicle comprising:
• a casing (10) having an inlet (101), an outlet (102), two sides and an inner surface,
• an air bag tray (40) attached to the outlet (102) in the casing (10) for supporting the air bag (C);
• an air generating device (2) mounted on the casing (10) and comprising a tube (20) extending into the casing (10) and having an air channel (202) defined in the tube (20) and multiple vents (201) communicating with the air channel (202), wherein the vents (201) are defined in the tube (20) at a side opposite to the outlet (102) in the casing (10);
• an air generator (30) attached to one end of the tube (20) and comprising
- a housing attached to the end of the tube (20);
- a chemical holder (35) mounted inside the housing to contain chemicals (A) and having multiple exhausting bores (350) communicating with the air channel (202) in the tube (20); and
- an igniting device (36) attached to the housing and extending into the chemical holder (35) to ignite the chemicals (A) in the chemical holder (35); and
• a guide plate (37) mounted inside the casing (10) and corresponding to the vents (201) in the tube (20), wherein a gap is defined between the tube (20) and the guide plate (37), the gap communicating with the vents (201) in the tube (20); and
• a check valve (50) mounted in the casing (10) and corresponding and closing the inlet (101) of the casing (10), **characterized in that** the gap between the tube (20) and the guide plate (37) defines a guiding channel (371) communicating with the outlet (102) in the casing (10).

2. The inflating device as claimed in claim 1, wherein each side of the casing (10) has a mounting hole (12) defined through the side; and the tube (20) is mounted between the mounting holes (12) in the casing (10).

3. The inflating device as claimed in claim 2, wherein the casing (10) further has two L-shaped brackets (11) for mounting the casing (10) to the vehicle.

4. The inflating device as claimed in claim 1, wherein the tube (20) has two open ends including a first open end and a second open end;
• the air generator (30) is mounted on the first open end of the tube (20); and
• a plug (21) is attached to and seals the second open end of the tube (20).

5. The inflating device as claimed in claim 4, wherein
• the air generator (30) further has a hollow filter holder (33) attached to the housing, extending into the air channel (202) in the tube (20) and having multiple through holes (330) defined through the filter holder (33) and communicating with the air channel (202); and
• a filter (331) is mounted around the filter holder (33) and covers the through holes (330) in the filter holder (33).

6. The inflating device as claimed in claim 5, wherein the air generator (30) further has a turbulence plate (34) mounted inside the housing and having multiple turbulence holes (340).

7. The inflating device as claimed in claim 6, wherein the housing comprises
• a base (31) attached to the tube (20) and having a bore (310) communicating with the air channel (202) in the tube (20); and
• a cover (32) detachably attached to the base (31) with threads and having a threaded mounting hole (320);
• the chemical holder (35) is attached to the threaded mounting hole (320);
• the igniting device (36) is mounted in the threaded mounting hole (320) in the cover (32) with a collar (362); and
• the filter holder (33) is attached to the bore (310) in the base (31).

8. The inflating device as claimed in claim 7, wherein
• the guide plate (37) is U-shaped and mounted around the tube (20); and
• the guiding channel (371) is U-shaped.

9. The inflating device as claimed in claim 8, wherein the check valve (50) comprises a V-shaped resilient sheet mounted in the casing (10) and having two ends attached to the sides of the casing (10) and two sides abutting with the inner surface of the casing (10) to close the inlet (101) in the casing (10).

## Patentansprüche

1. Aufblasvorrichtung für einen Gassack (C) eines Fahrzeugs, umfassend:
• einen Kasten (10), der einen Einlass (101), einen Auslass (102), zwei Seiten und eine Innenfläche aufweist,
• ein Gassack-Tablett (40), das an dem Auslass (102) in dem Kasten (10) zum Stützen des Gassacks (C) angebracht ist;
• eine Gas-erzeugende Vorrichtung (2), die an dem Kasten (10) montiert ist und ein Rohr (20) umfasst, das sich in den Kasten (10) erstreckt und einen Gaskanal (202) aufweist, der in dem Rohr (20) definiert ist, und mehrere Lüftungslöcher (201), die mit dem Gaskanal (202) in Verbindung stehen, wobei die Lüftungslöcher (201) in dem Rohr (20) an einer Seite gegenüber dem Auslass (102) in dem Kasten (10) definiert sind;
• einen Gasgenerator (30), der an einem Ende des Rohrs (20) angebracht ist, und umfasst
- ein Gehäuse, das an dem Ende des Rohrs (20) angebracht ist;
- einen Chemikalienhalter (35), der im Innern des Gehäuses montiert ist, um Chemikalien (A) zu enthalten und mehrere Absaugbohrungen (350) aufweist, die mit dem Gaskanal (202) in dem Rohr (20) in Verbindung stehen; und
- eine Zündvorrichtung (36), die an dem Gehäuse angebracht ist und sich in den Chemikalienhalter (35) erstreckt, um die Chemikalien (A) in dem Chemikalienhalter (35) zu entzünden; und
• eine Führungsplatte (37), die im Inneren des Kastens (10) montiert ist und den Lüftungslöchern (201) in dem Rohr (20) entspricht, wobei ein Spalt zwischen dem Rohr (20) und der Führungsplatte (37) definiert ist, wobei der Spalt mit den Lüftungslöchern (201) in dem Rohr (20) in Verbindung steht; und
• ein Rückschlagventil (50), das in dem Kasten (10) montiert ist und dem Einlass (101) des Kastens (10) entspricht und ihn schließt, **dadurch gekennzeichnet, dass** der Spalt zwischen dem Rohr (20) und der Führungsplatte (37) einen Führungskanal (371) definiert, der mit dem Auslass (102) in dem Kasten (10) in Verbindung steht.

2. Aufblasvorrichtung nach Anspruch 1, wobei jede Seite des Kastens (10) ein Montageloch (12) aufweist, das durch die Seite definiert ist; und das Rohr (20) zwischen den Montagelöchern (12) in dem Kasten (10) montiert ist.

3. Aufblasvorrichtung nach Anspruch 2, wobei der Kasten (10) überdies zwei L-förmige Klammern (11) zum Montieren des Kastens (10) an dem Fahrzeug aufweist.

4. Aufblasvorrichtung nach Anspruch 1, wobei das Rohr (20) zwei offene Enden aufweist, umfassend ein erstes offenes Ende und ein zweites offenes Ende;
• der Gasgenerator (30) an dem ersten offenen Ende des Rohrs (20) montiert ist; und
• ein Stopfen (21) an dem zweiten offenen Ende des Rohrs (20) angebracht ist und es abdichtet.

5. Aufblasvorrichtung nach Anspruch 4, wobei
• der Gasgenerator (30) überdies einen hohlen Filterhalter (33) aufweist, der an dem Gehäuse angebracht ist, sich in den Gaskanal (202) in dem Rohr (20) erstreckt und mehrere Durchgangslöcher (330) aufweist, die durch den Filterhalter (33) definiert sind und mit dem Gaskanal (202) in Verbindung stehen; und
• ein Filter (331) um den Filterhalter (33) montiert ist und die Durchgangslöcher (330) in dem Filterhalter (33) abdeckt.

6. Aufblasvorrichtung nach Anspruch 5, wobei der Gasgenerator (30) überdies eine Wirbelplatte (30) aufweist, die in dem Gehäuse montiert ist und mehrere Wirbellöcher (340) aufweist.

7. Aufblasvorrichtung nach Anspruch 6, wobei das Gehäuse umfasst
• eine Basis (31), die an dem Rohr (20) angebracht ist und eine Bohrung (310) aufweist, die mit dem Gaskanal (202) in dem Rohr (20) in Verbindung steht; und
• eine Abdeckung (32), die abnehmbar mit Gewinden an der Basis (31) angebracht ist und ein mit Gewinde versehenes Montageloch (320) aufweist;
• der Chemikalienhalter (35) ist an dem mit Gewinde versehenen Montageloch (320) angebracht;
• die Zündvorrichtung (36) ist in dem mit Gewinde versehenen Montageloch (320) in der Abdeckung (32) mit einer Manschetten (362) montiert; und
• der Filterhalter (33) ist an der Bohrung (310) in der Basis (31) angebracht.

8. Aufblasvorrichtung nach Anspruch 7, wobei
• die Führungsplatte (37) U-förmig ist und um das Rohr (20) montiert ist; und
• der Führungskanal (371) U-förmig ist.

9. Aufblasvorrichtung nach Anspruch 8, wobei das Rückschlagventil (50) eine V-förmige federnde Folie umfasst, die in den Kasten (10) montiert ist und zwei Enden aufweist, die an den Seiten des Kastens (10) angebracht sind, und zwei Seiten, die an der Innenfläche des Kastens (10) anliegen, um den Einlass (101) in dem Kasten (10) zu schließen.

## Revendications

1. Appareil pour gonfler un sac gonflable (C) d'un véhicule, comprenant :
• un boîtier (10) présentant une entrée (101), une sortie (102), deux côtés et une surface intérieure,
• un plateau de sac gonflable (40) attaché à la sortie (102) dans le boîtier (10) pour supporter le sac gonflable (C) ;
• un appareil générateur d'air (2) monté sur le boîtier (10) et comprenant un tube (20) s'étendant dans le boîtier (10) et présentant un canal d'air (202) défini dans le tube (20) et de multiples évents (201) communiquant avec le canal d'air (202), les évents (201) étant définis dans le tube (20) sur un côté opposé à la sortie (102) dans le boîtier (10) ;
• un générateur d'air (30) attaché à une extrémité du tube (20) et comprenant
- un carter attaché à l'extrémité du tube (20) ;
- un support de produits chimiques (35) monté dans le carter pour contenir des produits chimiques (A) et présentant de multiples trous d'échappement (350) communiquant avec le canal d'air (202) dans le tube (20) ; et
- un appareil d'allumage (36) attaché au carter et s'étendant dans le support de produits chimiques (35) pour allumer les produits chimiques (A) dans le support de produits chimiques (35); et
• une plaque de guidage (37) montée dans le boîtier (10) et s'accordant aux évents (201) dans le tube (20), un interstice étant défini entre le tube (20) et la plaque de guidage (37), l'interstice communiquant avec les évents (201) dans le tube (20) ; et
• un clapet de non-retour (50) monté dans le boîtier (10) et s'accordant à et fermant l'entrée (101) du boîtier (10), **caractérisé en ce que** l'interstice entre le tube (20) et la plaque de guidage (37) définit un canal de guidage (371) communiquant avec la sortie (102) dans le boîtier (10).

2. Appareil de gonflage selon la revendication 1, dans lequel chaque côté du boîtier (10) présente un trou de montage (12) défini à travers le côté ; et le tube (20) est monté entre les trous de montage (12) dans le boîtier (10).

3. Appareil de gonflage selon la revendication 2, dans lequel le boîtier (10) présente en outre deux supports en forme de L (11) pour monter le boîtier (10) dans le véhicule.

4. Appareil de gonflage selon la revendication 1, dans lequel le tube (20) présente deux extrémités ouvertes comprenant une première extrémité ouverte et une seconde extrémité ouverte ;
• le générateur d'air (30) est monté sur la première extrémité ouverte du tube (20) ; et
• un embout (21) est attaché à et scelle la seconde extrémité ouverte du tube (20).

5. Appareil de gonflage selon la revendication 4, dans lequel
• le générateur d'air (30) présente en outre un support de filtre creux (33) attaché au carter, s'étendant dans le canal d'air (202) dans le tube (20) et présentant de multiples trous débouchant (330) définis à travers le support de filtre (33) et communiquant avec le canal d'air (202) ; et
• un filtre (331) est monté autour du support de filtre (33) et recouvre les trous débouchant (330) dans le support de filtre (33).

6. Appareil de gonflage selon la revendication 5, dans lequel le générateur d'air (30) présente en outre une plaque tourbillonnaire (34) montée dans le carter et présentant de multiples trous tourbillonnaires (340).

7. Appareil de gonflage selon la revendication 6, dans lequel le carter comprend
• une base (31) attachée au tube (20) et présentant un trou (310) communiquant avec le canal d'air (202) dans le tube (20) ; et
• un couvercle (32) attaché de manière détachable à la base (31) avec des filets et présentant un trou de montage fileté (320) ;
• le support de produits chimiques (35) est attaché au trou de montage fileté (320) ;
• l'appareil d'allumage (36) est monté dans le trou de montage fileté (320) dans le couvercle (32) avec un manchon (362) ; et
• le support de filtre (33) est attaché au trou (310) dans la base (31).

8. Appareil de gonflage selon la revendication 7, dans lequel
• la plaque de guidage (37) est en forme de U et montée autour du tube (20) ; et
• le canal de guidage (371) est en forme de U.

9. Appareil de gonflage selon la revendication 8, dans lequel le clapet de non-retour (50) comprend une feuille résiliente en forme de V montée dans le boîtier (10) et présentant deux extrémités attachées aux côtés du boîtier (10) et deux côtés appuyant contre la surface intérieure du boîtier (10) pour fermer l'entrée (101) dans le boîtier (10).
